# EUROPEAN PATENT SPECIFICATION

(11) **EP 3 358 906 B1**
(45) Date of publication and mention of the grant of the patent: **26.02.2020**
(21) Application number: 15906525.9
(22) Date of filing: 23.10.2015
(51) Int. Cl.: H04W 76/10, H04W 4/20

(54) **METHOD, DEVICE AND SYSTEM FOR INFORMATION INTERACTION**
VERFAHREN, VORRICHTUNG UND SYSTEM ZUR INFORMATIONSINTERAKTION
PROCÉDÉ, DISPOSITIF ET SYSTÈME SERVANT AUX INTERACTIONS D'INFORMATIONS

(43) Date of publication of application: 08.08.2018
(73) Proprietor: Huawei Technologies Co., Ltd., Longgang District Shenzhen, Guangdong 518129 (CN)
(72) Inventor: PANG, Lingli, Shenzhen Guangdong 518129 (CN); HUANG, Min, Shenzhen Guangdong 518129 (CN); ZHENG, Xiaoxiao, Shenzhen Guangdong 518129 (CN); BI, Hao, Shenzhen Guangdong 518129 (CN)
(74) Representative: Thun, Clemens
(86) International application number: PCT/CN2015/092774
(87) International publication number: WO 2017/067008

(56) References cited:
- WO-A1-2013/006219
- WO-A1-2015/046851
- CN-A- 102 858 028
- CN-A- 103 037 448
- CN-A- 103 188 822
- US-A1- 2011 269 402

## Description

### TECHNICAL FIELD

The present disclosure relates to the mobile communications field, and in particular, to an information exchange method, a device, and a system.

### BACKGROUND

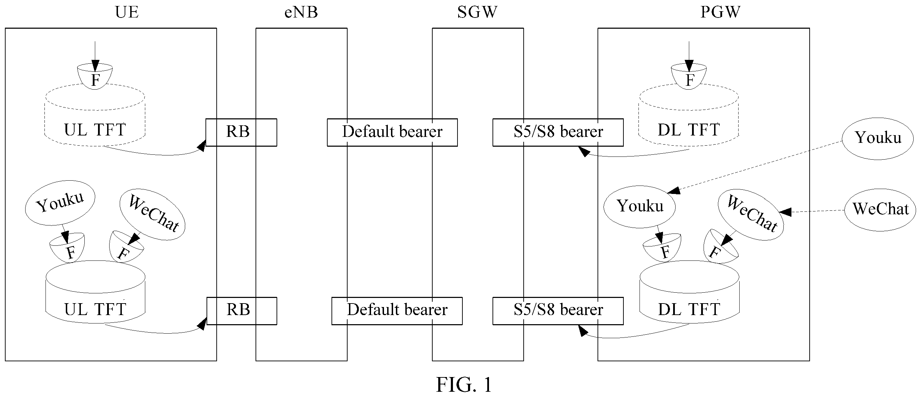

Currently, in a service data exchange process, a network side is usually a key factor for ensuring service transmission. As shown in FIG. 1, a data exchange of a specific service, such as WeChat or Youku, between user equipment (UE) and a server is completed by using a bearer provided by the network side (including an access network evolved NodeB (eNB) and a core network serving gateway (SGW)/a packet data network gateway (PGW)).

US 2011/0269402 A1 refers to a method and corresponding apparatus for performing minimization of drive tests (MDT) in a mobile communication system are provided. The method may include receiving, by a base station, a control message from a user equipment (UE). The control message may be one of a MDT prohibit indication configured to indicate the base station should not select the UE for performing MDT, a UE status indication including at least one first UE parameter to be used by the base station when selecting MDT UEs, and a MDT measurement rejection when at least one second UE parameter differs from a predetermined UE parameter threshold.

Further, WO 2013/006219 A1 refers to techniques and configurations for transmitting small data payloads such as, for example, Machine Type Communication (MTC) data in a wireless communication network. A system may include features to implement an interworking function (IWF) to receive, from a machine type communication (MTC) server, a trigger to send a data payload, which is smaller than a preconfigured threshold, to a user equipment (UE) over a wireless communication network, and send, over a first reference point to a first module including a Mobility Management Entity (MME) or a Serving GPRS (General Packet Radio Service) Support Node (SGSN) or a second reference point to a second module including a Home Location Register (HLR) or a Home Subscriber Server (HSS), the data payload and a request to forward the data payload to the UE.

However, in an existing mobile communications system, the network side cannot interact with an application layer of the UE. On one hand, this causes a problem that the network side cannot perform scheduling optimization according to a specific service. Consequently, proper resource allocation and use cannot be ensured, and resource utilization is reduced. On the other hand, the UE side cannot perform corresponding service adjustment according to information on the network side either. Consequently, user experience is degraded.

Therefore, how to implement the interaction between the network side and the application layer of the UE becomes a problem to be urgently resolved currently.

### SUMMARY

The problem is solved by the subject-matter of independent claim 1. Further implementation forms can be found in the dependent claims.

Embodiments hereinafter provide an information exchange method, a device, and a system, to resolve a prior-art problem that an interaction between a network side and an application layer of UE cannot be implemented.

Based on the information exchange method, the device, and the system that are provided in the embodiments, when information is exchanged, the application layer of the UE first sends the first information to the RRC layer of the UE, and further, the UE sends the first information to the first network device by using the first RRC message. Therefore, an interaction between the application layer of the UE and a network side is implemented, so that the first network device can perform service adjustment or optimization according to the obtained first information, thereby ensuring proper resource allocation and use.

For example, using a video service as an example, at a video play stage, after the UE reports the first information to the network side, the network side may determine, according to the first information, that the UE is in an initial video waiting stage. Further, the network side accelerates scheduling of a downlink data packet of the UE according to the first information, thereby ensuring that the data packet can fast arrive at the UE for play, ensuring the proper resource allocation and use, reducing a waiting delay of a user, and improving user experience.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description show merely some embodiments of the present disclosure, and a person of ordinary skill in the art may still derive other drawings from these accompanying drawings without creative efforts.
FIG. 1 is a schematic flowchart of a data exchange between UE and a network side in an existing mobile communications network;
FIG. 2 is a schematic architectural diagram of a mobile communications system according to an embodiment of the present disclosure;
FIG. 3 is a schematic diagram of a layered architecture of UE according to an embodiment of the present disclosure;
FIG. 4 is a schematic diagram of a transmission direction of information between UE and a network device in an information exchange method according to an embodiment of the present disclosure;
FIG. 5 is a first schematic diagram of an exchange in an information exchange method according to an embodiment of the present disclosure;
FIG. 6 is a second schematic diagram of an exchange in an information exchange method according to an embodiment of the present disclosure;
FIG. 7 is a third schematic diagram of an exchange in an information exchange method according to an embodiment of the present disclosure;
FIG. 8 is a fourth schematic diagram of an exchange in an information exchange method according to an embodiment of the present disclosure;
FIG. 9 is a fifth schematic diagram of an exchange in an information exchange methodaccording to the present disclosure;
Fig. 10 is a sixth schematic diagram of an exchange in an information exchange method according to an embodiment of the present disclosure;
FIG. 11 is a seventh schematic diagram of an exchange in an information exchange method according to an embodiment of the present disclosure;
FIG. 12 is an eighth schematic diagram of an exchange in an information exchange method according to an embodiment of the present disclosure;
FIG. 13A and FIG. 13B are a ninth schematic diagram of an exchange in an information exchange method according to an embodiment of the present disclosure;
FIG. 14A and FIG. 14B are a tenth schematic diagram of an exchange in an information exchange method according to an embodiment of the present disclosure;
FIG. 15 is an eleventh schematic diagram of an exchange in an information exchange method according to an embodiment of the present disclosure;
FIG. 16 is a first schematic structural diagram of UE according to an embodiment of the present disclosure;
FIG. 17 is a second schematic structural diagram of UE according to an embodiment of the present disclosure;
FIG. 18 is a first schematic structural diagram of a first network device according to an embodiment of the present disclosure;
FIG. 19 is a second schematic structural diagram of a first network device according to an embodiment of the present disclosure;
FIG. 20 is a third schematic structural diagram of UE according to an embodiment of the present disclosure;
FIG. 21 is a third schematic structural diagram of a first network device according to an embodiment of the present disclosure;
FIG. 22 is a schematic structural diagram of an information exchange apparatus according to an embodiment of the present disclosure; and
FIG. 23 is a schematic structural diagram of an information exchange system according to an embodiment of the present disclosure.

### DESCRIPTION OF EMBODIMENTS

Exemplary embodiments are described in the following to illustrate the invention with reference to the accompanying drawings. Apparently, the described embodiments are merely a part rather than all of the embodiments. In the following descriptions, for the purpose of explanation but not for limitation, particular details are described for clear understanding. In some embodiments, an apparatus, a circuit, and a method that are publicly known are not described in detail, so that the descriptions are not ambiguous due to unnecessary details. In the specification, a same reference numeral or a same name refers to same or similar elements.

For ease of describing the technical solutions in the embodiments of the present disclosure clearly, in the embodiments of the present disclosure, words such as "first" and "second" are used to distinguish same or similar items with a basically same function and role. A person of ordinary skill in the art can understand that the words such as "first" and "second" do not define the amount and the operating sequence.

The present disclosure is mainly applied to a mobile communications system. The mobile communications system may be a universal mobile telecommunications system (UMTS), or may be a long term evolution (LTE) system, an LTE advanced (LTE-A) system, another future release of further-evolution communications system, another mobile communications system, or the like. This is not specifically limited in the embodiments of the present disclosure.

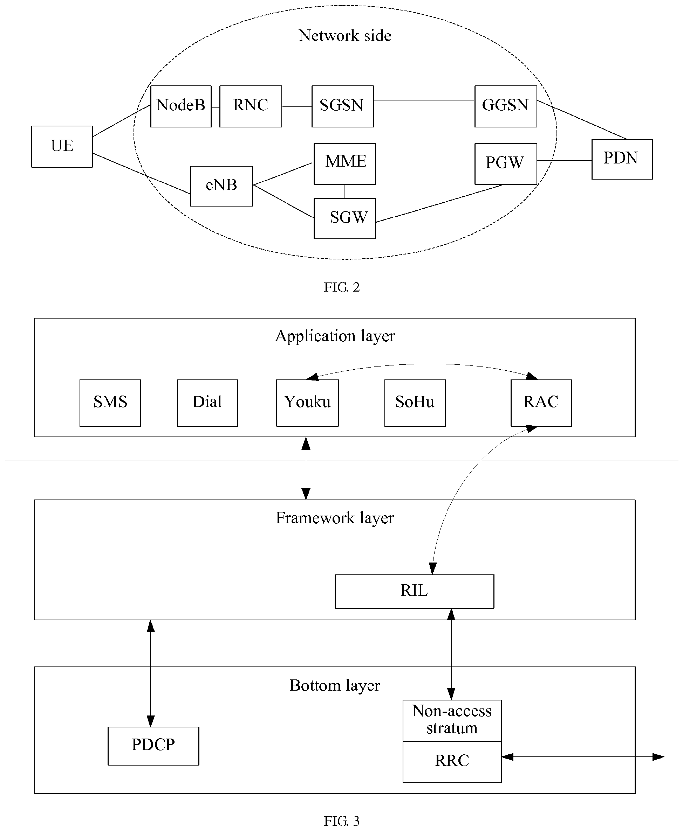

As shown in FIG. 2, for the UMTS, UE accesses a packet data network (PDN) by using a base station (NodeB), a radio network controller (RNC), a serving general packet radio service (GPRS) support node (SGSN), and a gateway GPRS support node (GGSN).

For the LTE system, UE accesses a PDN by using an eNB, a mobility management entity (MME), a serving gateway (SGW), and a packet data network (PGW).

A network device in each of the following embodiments may be an access network device (for example, the RNC in the UMTS or the eNB in the LTE system) in the mobile communications system shown in FIG. 2, or may be a core network device (for example, the SGSN or the GGSN in the UMTS, or the MME, the SGW, or the PGW in the LTE system) in the mobile communications system shown in FIG. 2, or may be an access network device or a core network device in another mobile communications system. Certainly, the network device in each of the following embodiments may alternatively be any relay device in a service data transmission process. The trunk device may be UE. This is not specifically limited in the embodiments of the present disclosure.

FIG. 3 is a schematic diagram of a layered architecture of UE according to an embodiment of the present disclosure. The layered architecture includes an application layer, a framework layer, and a modem layer. The included modem layer herein is also referred to as a bottom layer.

The application layer includes various applications, for example, a short messaging service (SMS), a dialup service (Dial), Youku, and Sohu. In addition, the application layer may further include a radio access network application control (RAC) logical function entity. The RAC logical function entity may be a function, a functional entity, or a protocol layer, and is mainly used for obtaining and transmission of the following first information on a UE side. Further, the RAC logical function entity may further be used for parsing of the following received second information. Certainly, the RAC logical function entity shown in FIG. 2 is merely an example. The RAC logical function entity may alternatively be located on the framework layer, or some functions of the RAC logical function entity are located on the framework layer or the application layer (for example, obtaining and transmission of the first information), and some functions are located on the modem layer (for example, encapsulation of the first information, and parsing of the second information). This is not specifically limited in this embodiment of the present disclosure.

In addition, it should be noted that in another future release of further-evolution communications system or another mobile communications system, a name of the RAC logical function entity may change, provided that a unit or module having functions of the RAC logical function entity in this embodiment of the present disclosure belongs to the protection scope of this embodiment of the present disclosure. A uniform explanation is given herein.

The framework layer includes a radio interface layer (RIL).

The modem layer includes a non-access stratum and an access stratum. The access stratum includes a protocol layer for data processing, for example, a radio resource control (RRC) layer, or a packet data convergence protocol (PDCP) layer.

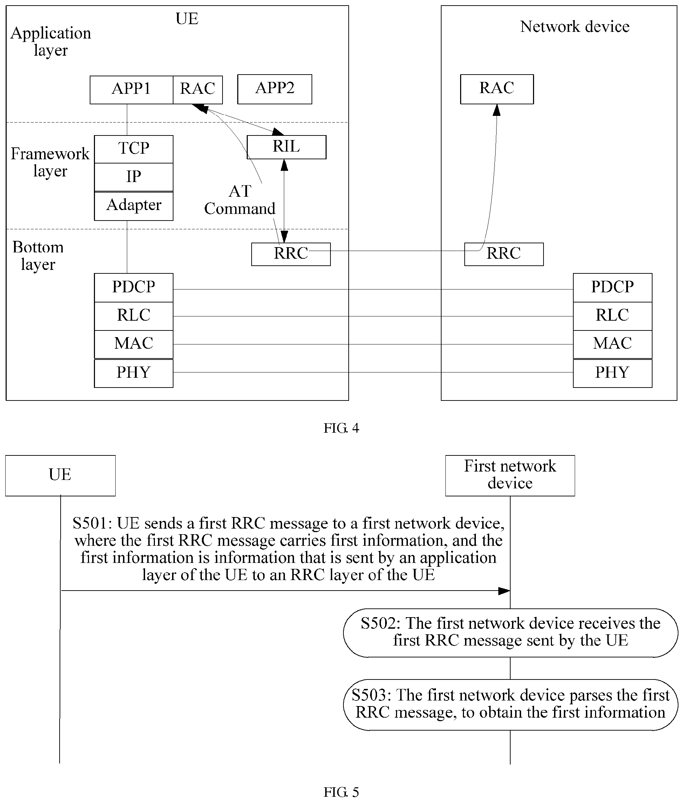

According to the schematic diagram of the layered architecture of the UE shown in FIG. 3, a schematic diagram of a transmission direction of information between UE and a network device in an information exchange method according to an embodiment of the present disclosure is provided, as shown in FIG. 4. As can be learned from FIG. 4, in this embodiment of the present disclosure, inside the UE, an application layer communicates with a bottom layer by using an AT command (Attention Command). For example, when information on a network side arrives at the bottom layer of the UE, an RRC layer of the UE sends the information to the application layer on the UE side by using an AT command. When information at the application layer of the UE needs to be transmitted to the bottom layer, the application layer of the UE sends the information to the RRC layer of the UE by using an AT command.

It should be noted that when information on the network side arrives at the bottom layer of the UE, the RRC layer of the UE may directly send the information to the application layer on the UE side by using an AT command. Alternatively, the RRC layer of the UE may not directly send the information to the application layer on the UE side by using an AT command. Instead, the RRC layer of the UE transmits, to another module (for example, an NAS layer) at the bottom layer, the information that is sent by the network side to the application layer, and the another module at the bottom layer of the UE sends the information to the application layer on the UE side by using an AT command. This is not specifically limited in this embodiment of the present disclosure, and shall be subject to an actual transmission mechanism.

Similarly, when information at the application layer of the UE needs to be transmitted to the bottom layer, the application layer of the UE may directly send the information to the RRC layer of the UE by using an AT command. Alternatively, the application layer of the UE may not directly send the information to the RRC layer of the UE by using an AT command. Instead, the application layer of the UE sends the information to another module (for example, an NAS layer) at the bottom layer by using an AT command, and the another module at the bottom layer of the UE sends the information to the RRC layer of the UE. This is not specifically limited in this embodiment of the present disclosure.

Based on the foregoing description, an embodiment of the present disclosure provides an information exchange method. As shown in FIG. 5, the method includes the following steps:
S501: UE sends a first RRC message to a first network device, where the first RRC message carries first information, and the first information is information that is sent by an application layer of the UE to an RRC layer of the UE.

The first information includes at least one of the following information: service information of the UE, sensor information of the UE, user behavior information, and status information of the UE.

S502: The first network device receives the first RRC message sent by the UE.

S503: The first network device parses the first RRC message, to obtain the first information.

First, it should be noted that the "first network device" in this embodiment of the present disclosure may be any network device described in the foregoing embodiments. "First" is merely used to distinguish from "second" in the following "second network device". A uniform explanation is given herein.

For example, in step S501 of this embodiment of the present disclosure: the service information of the UE includes at least one of the following information: service identification information, request indication type information, service cache information, to-be-received data information, service status information, local routing information, transmission control protocol (TCP) proxy information, and data routing information.

The service identification information is used to indicate an over the top (OTT) or a service provider to which a service belongs, a name or an identifier of a service, and/or the like. The service identification information may include at least one of the following information: provider information of the service, a type of the service, a name of an application providing the service, the name of the service, and a server address (for example, an internet protocol (IP) address and/or a TCP port number) corresponding to the service, and the like.

Using a video service as an example, a provider of the service may include different application names such as Sohu Video and Tencent Video, or provider information or an address (a port number) of the service.

The type of the service may include a specific name that reflects a service feature, such as a video service or a game. Further, the video service may be classified into a live service, an on-demand service, and the like.

The name of the service may be a name or an internal serial number of the service, for example, channel information or program information in the video service, for example, The Journey of Flower (a Chinese television series).

It should be noted that the service in this embodiment of the present disclosure may be a sub service flow of a specific application or data of a fragment corresponding to an application. This is not specifically limited in this embodiment of the present disclosure. For the first information in this embodiment of the present disclosure, each service of the UE may correspond to one piece of first information, or multiple services that are being performed or to be performed by the UE may correspond to one piece of first information. This is not specifically limited in this embodiment of the present disclosure.

The request indication type information is used to indicate whether a service request initiated by a user is a request for the service for the first time or whether the user is waiting at a buffering stage. For example, using a video service as an example, the information is used to indicate whether the UE is at a wait stage of video play, and is mainly used to indicate waiting of the user due to that a video is played for the first time or the video is dragged or the like.

The service cache information is used to indicate a size of a cache when the first information is reported, whether dynamic adaptive streaming over hypertext transfer protocol (HTTP) (DASH) is supported, and/or the like. The service cache information may include: at least one of the following information: a total size of a cache, a size of data in a cache when a request is sent, a size of an unoccupied cache when a request is sent, a bit rate corresponding to data in a cache, and a fast scheduling indication for requesting a data packet, or the like.

For example, the cache may be a cache at the application layer (for example, a size of storage space occupied by a played service or an application), or may be a TCP cache. This is not specifically limited in this embodiment of the present disclosure. The size of the data in the cache may be a time required for clearing the data in the cache. Using a video service as an example, the information may be a time for which the data in the cache can be played.

The fast scheduling indication for requesting a data packet is used to instruct a network side to fast schedule downlink data, and is usually used in a scenario in which a current cache already satisfies a condition.

The to-be-received data information is used to indicate information about data that the UE waits to receive, and may include at least one of the following information: a size of a to-be-received data packet, a delay of to-be-received data, and an identifier of a to-be-received data packet, or the like. The identifier of the to-be-received data packet herein is used to determine data that a cache of the UE is waiting to receive. For example, the identifier of the to-be-received data packet may be an IP 5-tuple corresponding to the data packet, that is, an IP address, a source port, a destination IP address, a destination port, and a transport layer protocol; or may be a serial number of an identifier corresponding to the data packet. The delay of the to-be-received data indicates that the UE needs to receive the to-be-received data within a time.

The service status information is used to indicate a play status of a current service, for example, indicate that the current service is in a play state, an initial wait state, a stalling wait state, or the like.

The local routing information may include at least one of the following information: information indicating that the UE supports local routing, and information about target UE, and the like.

It should be noted that in this embodiment of the present disclosure, the local routing information and the service identification information may be together used to indicate a service in which local routing can be performed. The service identification information herein may further include a bearer identifier of the service or a type of the service, for example, a server address corresponding to the service. This is not specifically limited in this embodiment of the present disclosure. The local routing is for a point-to-point communication service type.

The TCP proxy information is used to indicate whether a TCP proxy function is supported, a specific identifier of a service that needs TCP proxy, and/or the like. For example, the TCP proxy information may include information indicating that the UE supports the TCP proxy.

It should be noted that in this embodiment of the present disclosure, the TCP proxy information and the service identification information may be together used to indicate TCP proxy can be performed for the service. The service identification information herein may further include a bearer identifier of the service or a type of the service, for example, a server address corresponding to the service. This is not specifically limited in this embodiment of the present disclosure.

For example, in step S501 of this embodiment of the present disclosure, the sensor information of the UE includes at least one of the following information: a motion rate of the UE, a motion track of the UE, and a motion direction of the UE.

For example, in step S501 of this embodiment of the present disclosure, the user behavior information includes at least one of the following information: service termination, service suspension, screen locking, and turning off the UE.

For example, in step S501 of this embodiment of the present disclosure, the status information of the UE includes at least one of the following information: a quantity of electricity of the UE, screen resolution of the UE, and a screen size of the UE.

It should be noted that in the embodiments of the present disclosure, "at least one" may be one, or may be a combination of multiple. This is not limited in this embodiment of the present disclosure.

It should be noted that in the embodiments of the present disclosure, the application layer of the UE may be an application of the UE, and the first information may be obtained by the application layer in FIG. 3, or may be obtained by a framework layer or a bottom layer, but is not limited to being obtained by a specific application protocol layer.

For example, in step S503 of this embodiment of the present disclosure, in a possible implementation, the parsing, by the first network device, the first RRC message, to obtain the first information may include: parsing, by an RRC layer of the first network device, the first RRC message, to obtain the first information.

That is, the first information may be a specific information element (IE) in the first RRC message. The RRC layer of the first network device that serves as a receive end may directly parse the first RRC message, to obtain the first information.

In another possible implementation, the parsing, by the first network device, the first RRC message, to obtain the first information may include: parsing, by an RRC layer of the first network device, the first RRC message, to obtain encapsulation information of the first information; and sending, by the RRC layer of the first network device, the encapsulation information of the first information to an RAC layer of the first network device, and parsing, by the RAC layer of the first network device, the encapsulation information of the first information, to obtain the first information.

That is, the first information may be information in a container in the first RRC message. An RRC protocol layer of the first network device that serves as the receive end cannot directly obtain the first information by parsing the first RRC message. Instead, the RRC protocol layer obtains the container (which may be considered as the encapsulation information of the first information). Further, the RRC layer of the first network device sends the encapsulation information of the first information to the RAC layer of the first network device, and the RAC layer of the first network device parses the encapsulation information of the first information, to obtain the first information.

It should be noted that the two implementations in which the RRC layer of the first network device parses the first RRC message, to obtain the first information are merely provided as examples. Certainly, there may be another possible implementation. This is not specifically limited in this embodiment of the present disclosure.

It should be noted that in another future release of further-evolution communications system or another mobile communications system, a name of an RAC logical function entity of the first network device or a name of the RRC layer may change, provided that a unit or module having functions of the RAC logical function entity of the first network device or the RRC layer in this embodiment of the present disclosure belongs to the protection scope of this embodiment of the present disclosure. A uniform explanation is given herein.

It should be noted that some information of the first information may be obtained by using a second network device or a service server. This is not specifically limited in this embodiment of the present disclosure.

Based on the information exchange method provided in this embodiment of the present disclosure, in this embodiment of the present disclosure, when information is exchanged, the application layer of the UE first sends the first information to the RRC layer of the UE, and further, the UE sends the first information to the first network device by using the first RRC message. Therefore, an interaction between the application layer of the UE and a network side is implemented, so that the first network device can perform service adjustment or optimization according to the obtained first information, thereby ensuring proper resource allocation and use.

For example, using a video service as an example, at a video play stage, after the UE reports the first information to the network side, the network side may determine, according to the first information, that the UE is in an initial video waiting stage. Further, the network side accelerates scheduling of a downlink data packet of the UE according to the first information, thereby ensuring that the data packet can fast arrive at the UE for play, ensuring the proper resource allocation and use, reducing a waiting delay of a user, and improving user experience.

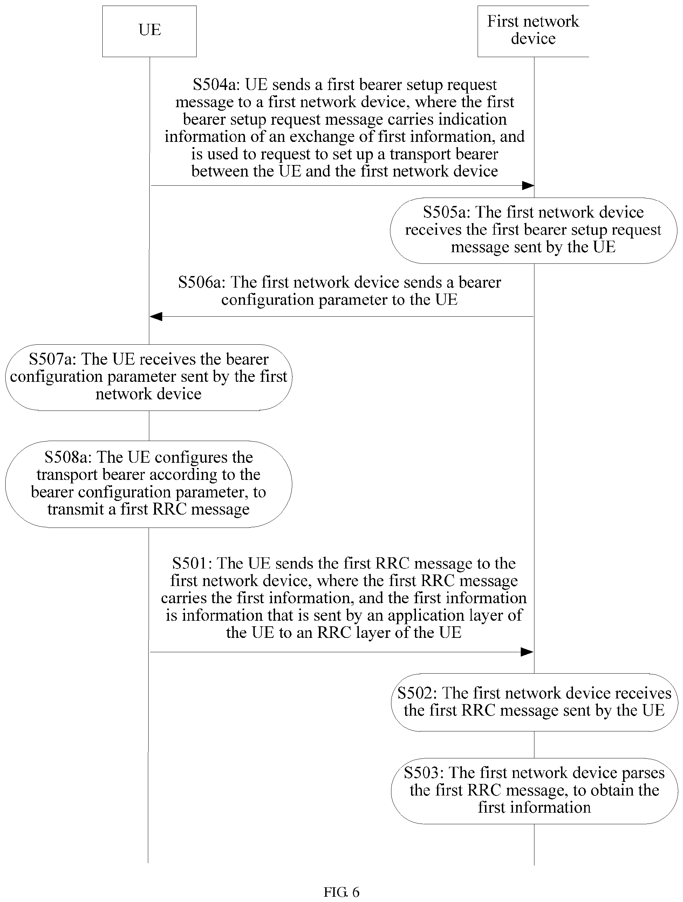

Optionally, as shown in FIG. 6, before the UE sends the first RRC message to the first network device (step S501), the method may further include the following steps:
S504a: The UE sends a first bearer setup request message to the first network device, where the first bearer setup request message carries indication information of an exchange of the first information, and is used to request to set up a transport bearer between the UE and the first network device.

The first bearer setup request message may be an RRC connection establishment request or a bearer setup request. This is not specifically limited in this embodiment of the present disclosure.

S505a: The first network device receives the first bearer setup request message sent by the UE.

S506a: The first network device sends a bearer configuration parameter to the UE.

An LTE system is used as an example. The bearer configuration parameter may include: radio link control (RLC) configuration information, logical channel configuration information, configuration information of a physical layer, and/or the like. This is not specifically limited in this embodiment of the present disclosure.

The bearer configuration parameter may be sent to the UE by using an RRC connection establishment response or a bearer setup response. This is not specifically limited in this embodiment of the present disclosure.

S507a: The UE receives the bearer configuration parameter sent by the first network device.

S508a: The UE configures the transport bearer according to the bearer configuration parameter, to transmit the first RRC message.

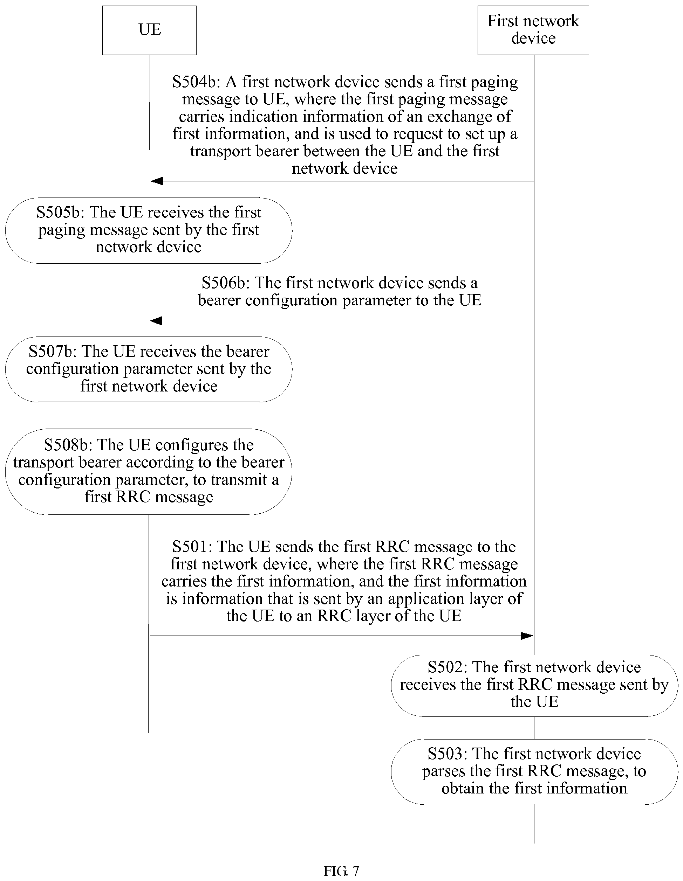

Optionally, as shown in FIG. 7, before the first network device receives the first RRC message sent by the UE (step S502), the method may further include the following steps:
S504b: The first network device sends a first paging message to the UE, where the first paging message carries indication information of an exchange of the first information, and is used to request to set up a transport bearer between the UE and the first network device.
S505b: The UE receives the first paging message sent by the first network device.
S506b: The first network device sends a bearer configuration parameter to the UE.

An LTE system is used as an example. The bearer configuration parameter may include: RLC configuration information, logical channel configuration information, configuration information of a physical layer, and/or the like. This is not specifically limited in this embodiment of the present disclosure.

The bearer configuration parameter may be sent to the UE by using an RRC connection establishment message or an RRC connection reconfiguration message. This is not specifically limited in this embodiment of the present disclosure.

S507b: The UE receives the bearer configuration parameter sent by the first network device.

S508b: The UE configures the transport bearer according to the bearer configuration parameter, to transmit the first RRC message.

FIG. 6 and FIG. 7 separately show two implementations in which the UE actively sets up the transport bearer and passively sets up the transport bearer when the transport bearer does not exist in a transmission process of the first information. After completing the setup of the transport bearer, the UE may transmit the first information to the first network device by using the transport bearer.

It should be noted that the transport bearer may be a bearer shared with another RRC message, for example, a signaling radio bearer (SRB) 1 or an SRB2 in the existing Protocol 36.331. Certainly, the transport bearer may alternatively be a dedicated bearer of the first RRC message. This is not specifically limited in this embodiment of the present disclosure.

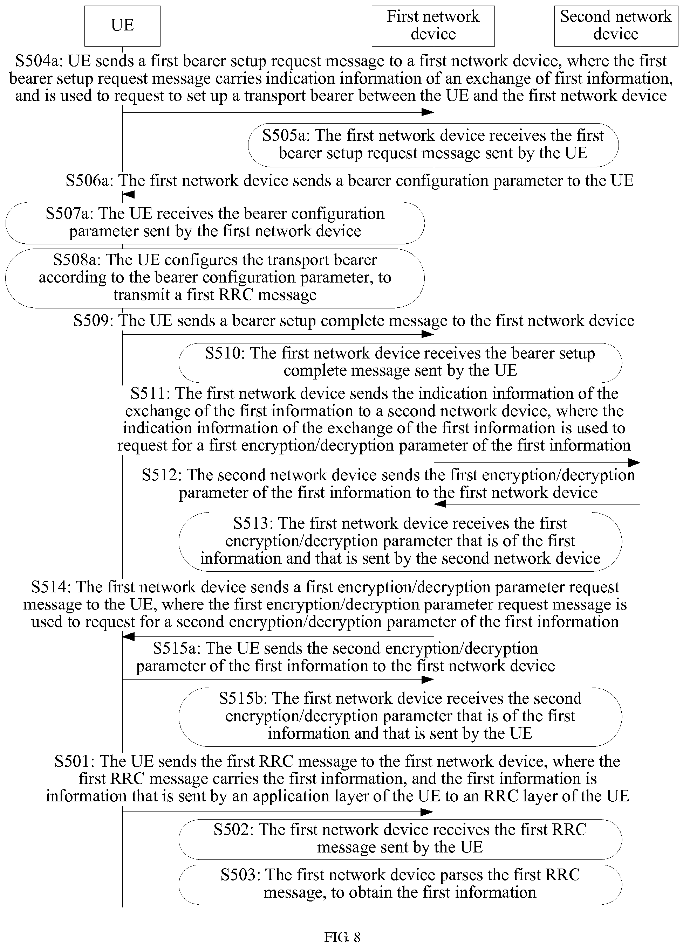

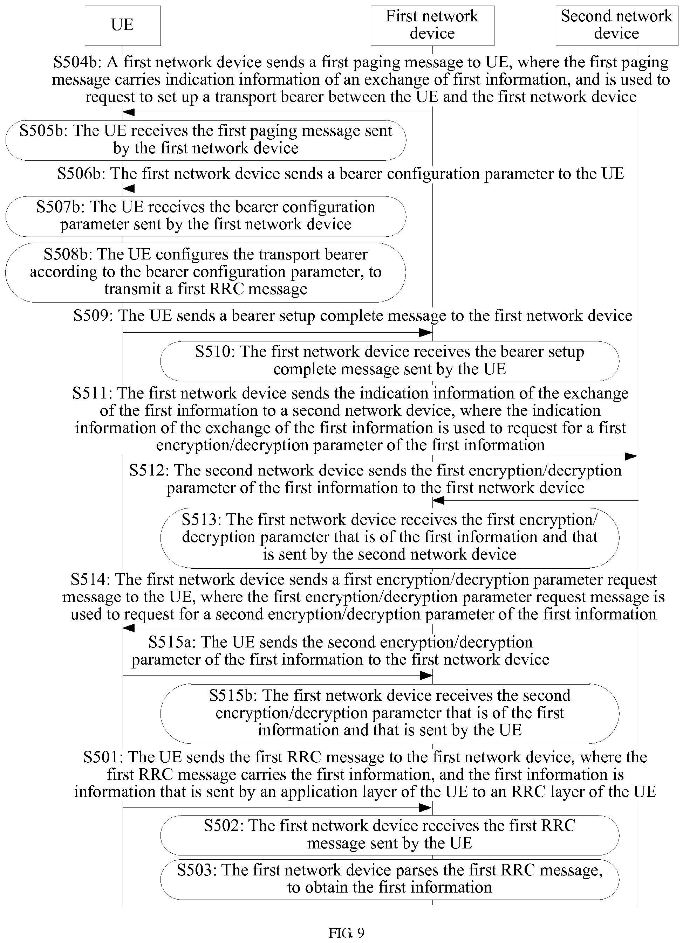

Optionally, considering that an encryption parameter is not negotiated in a setup process of the transport bearer, if the UE in an idle state (that is, there is no encryption/decryption-related parameter) triggers the foregoing process, high layer information possibly cannot be encrypted at an air interface during transmission. Therefore, in this embodiment of the present disclosure, as shown in FIG. 8 or FIG. 9, after the first network device receives the bearer setup request message sent by the UE (step S505a), or after the first network device sends the first paging message to the UE (step S504b), the method further includes the following steps.

S509: The UE sends a bearer setup complete message to the first network device.

S510: The first network device receives the bearer setup complete message sent by the UE.

S511: The first network device sends the indication information of the exchange of the first information to a second network device, where the indication information of the exchange of the first information is used to request for a first encryption/decryption parameter of the first information.

For example, if the mobile communications system is an LTE system, the first network device is an eNB, and the second network device is an MME, the eNB may send the indication information of the exchange of the first information to the MME by using an initial UE message. The first encryption/decryption parameter is a key parameter required for encryption/decryption.

It should be noted that the "second network device" in this embodiment of the present disclosure may be any network device described in the foregoing embodiments. "Second" is merely used to distinguish from "first" in the foregoing "first network device". A uniform explanation is given herein.

S512: The second network device sends the first encryption/decryption parameter of the first information to the first network device.

S513: The first network device receives the first encryption/decryption parameter that is of the first information and that is sent by the second network device.

S514: The first network device sends a first encryption/decryption parameter request message to the UE, where the first encryption/decryption parameter request message is used to request for a second encryption/decryption parameter of the first information.

S515a: The UE sends the second encryption/decryption parameter of the first information to the first network device.

S515b: The first network device receives the second encryption/decryption parameter that is of the first information and that is sent by the UE.

For example, if the mobile communications system is an LTE system, the first network device is an eNB, and the second network device is an MME, the eNB may send the second encryption/decryption parameter of the first information to the eNB by using a security mode message. The second encryption/decryption parameter is an algorithm parameter required for encryption/decryption.

Subsequently, the UE and the first network device may exchange the first information. For example, before sending the first RRC message to the first network device, the UE encrypts the first information by using a first encryption parameter and a second encryption parameter of the first information. After receiving the first RRC message sent by the UE, the first network device decrypts the first information by using a first decryption parameter and a second decryption parameter of the first information. Details are not described in this embodiment of the present disclosure.

It should be noted that the encryption/decryption may alternatively be integrity protection of a corresponding parameter. When the second network device does not exist, the first encryption/decryption parameter of the first information does not need to be obtained by means of the foregoing process. Further, the first network device may obtain all encryption/decryption parameters from the UE or the second network device, and does not need to obtain the encryption/decryption parameters separately from two parties. This is not specifically limited in this embodiment of the present disclosure.

According to the foregoing embodiment, when the UE in an idle state sets up the transport bearer and transmits the first information, the UE may complete air-interface encryption of the first information, thereby improving information transmission security.

It should be noted that in this embodiment of the present disclosure, steps S509 and S510 and step S511 are not necessarily performed according to a chronological order. Steps S509 and S510 may be first performed, and then step S511 is performed. Alternatively, S511 may be first performed, and then steps S509 and S510 are performed. Alternatively, steps S509 and S510 and step S511 may be simultaneously performed. This is not specifically limited in this embodiment of the present disclosure.

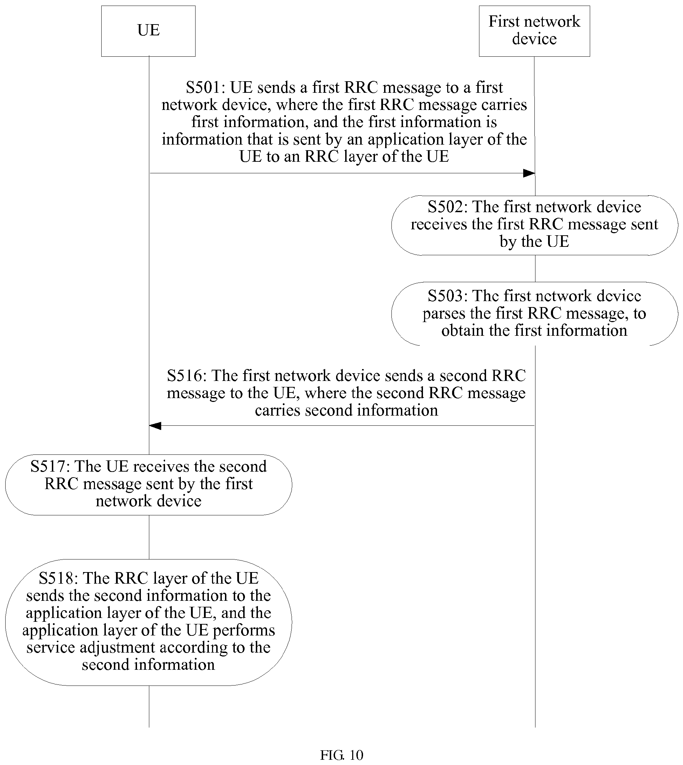

Optionally, as shown in FIG. 10, the information exchange method provided in this embodiment of the present disclosure may further include the following steps.

S516: The first network device sends a second RRC message to the UE, where the second RRC message carries second information.

For example, the second information includes at least one of the following information: cell load information, cell edge indication information, handover indication information, cell capability information, and bit rate switch indication information.

The cell capability information is information indicating that a cell supports TCP proxy and/or direct routing.

S517: The UE receives the second RRC message sent by the first network device.

S518: The RRC layer of the UE sends the second information to the application layer of the UE, and the application layer of the UE performs service adjustment according to the second information.

It should be noted that some information in the second information may be transmitted to the application layer of the UE, and some information may be transmitted to the RRC layer of the UE. For example, the cell capability information may be obtained by the RRC layer of the UE, and does not need to be transmitted to the application layer. Based on this, when the second information is encapsulated, information that needs to be transmitted to the RRC layer of the UE does not need to be encapsulated into a container.

That is, in this embodiment of the present disclosure, not only transmission of the first information from the application layer of the UE to the first network device can be implemented, but also transmission of the second information from the first network device to the application layer of the UE can be implemented, so that the application layer of the UE can perform service adjustment by fully using information on the network side, thereby ensuring user experience.

For example, using a video service as an example, the network side switches a bit rate of the UE to a lower level according to information such as current load of the network side, thereby ensuring normal play of the service by sending a relatively small amount of data within a same time, mitigating watching stalling for a user, and improving service experience of the user.

It should be noted that in this embodiment of the present disclosure, steps S501 to S503 and steps S516 to S518 are not necessarily performed according to a chronological order. Steps S501 to S503 may be first performed, and then steps S516 to S518 are performed. Alternatively, steps S516 to S518 may be first performed, and then steps S501 to S503 are performed. Alternatively, steps S501 to S503 and steps S516 to S518 may be simultaneously performed. This is not specifically limited in this embodiment of the present disclosure.

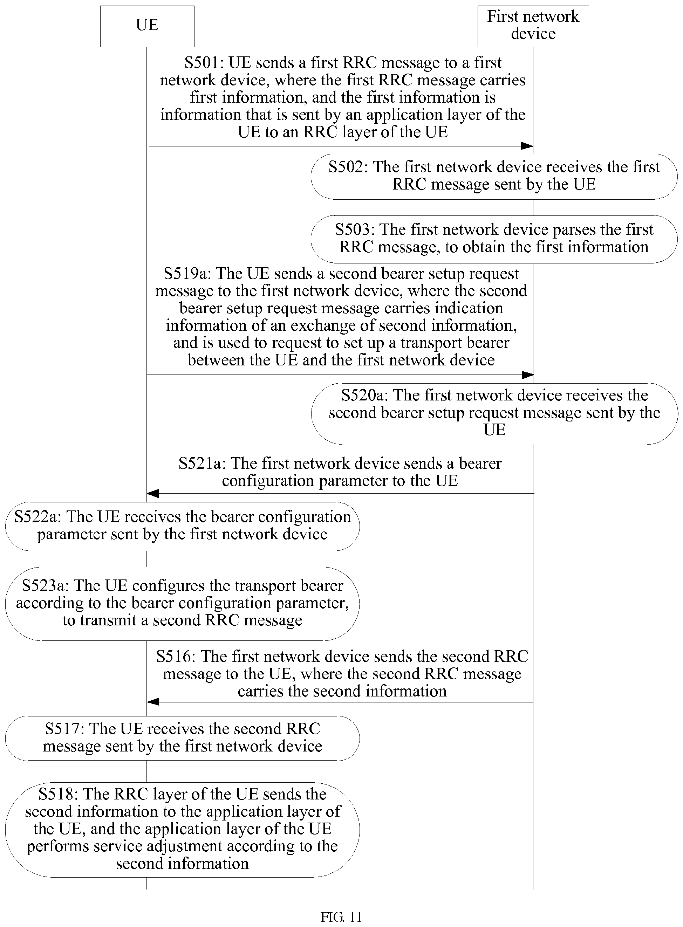

Optionally, as shown in FIG. 11, before the UE receives the second RRC message sent by the first network device (step S517), the method may further include the following steps.

S519a: The UE sends a second bearer setup request message to the first network device, where the second bearer setup request message carries indication information of an exchange of the second information, and is used to request to set up the transport bearer between the UE and the first network device.

The second bearer setup request message may be an RRC connection establishment request or a bearer setup request. This is not specifically limited in this embodiment of the present disclosure.

S520a: The first network device receives the second bearer setup request message sent by the UE.

S521a: The first network device sends a bearer configuration parameter to the UE.

An LTE system is used as an example. The bearer configuration parameter may include: RLC configuration information, logical channel configuration information, configuration information of a physical layer, and/or the like. This is not specifically limited in this embodiment of the present disclosure.

The bearer configuration parameter may be sent to the UE by using an RRC connection establishment response or a bearer setup response. This is not specifically limited in this embodiment of the present disclosure.

S522a: The UE receives the bearer configuration parameter sent by the first network device.

S523a: The UE configures the transport bearer according to the bearer configuration parameter, to transmit the second RRC message.

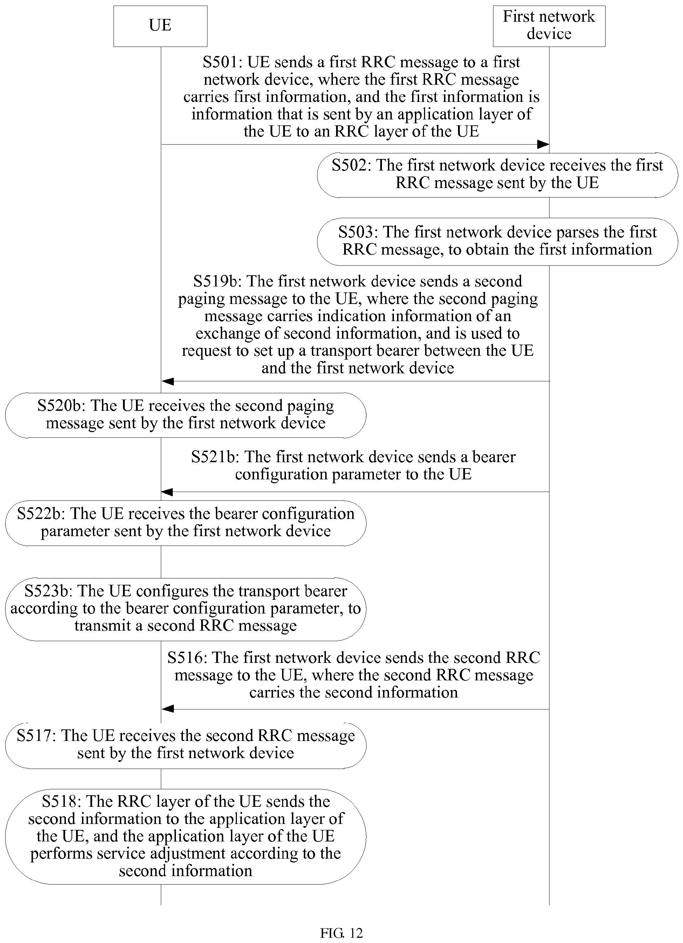

Optionally, as shown in FIG. 12, before the first network device sends the second RRC message to the UE (step S516), the method may further include the following steps:
S519b: The first network device sends a second paging message to the UE, where the second paging message carries indication information of an exchange of the second information, and is used to request to set up the transport bearer between the UE and the first network device.
S520b: The UE receives the second paging message sent by the first network device.
S521b: The first network device sends a bearer configuration parameter to the UE.

An LTE system is used as an example. The bearer configuration parameter may include: RLC configuration information, logical channel configuration information, configuration information of a physical layer, and/or the like. This is not specifically limited in this embodiment of the present disclosure.

The bearer configuration parameter may be sent to the UE by using an RRC connection establishment message or an RRC connection reconfiguration message. This is not specifically limited in this embodiment of the present disclosure.

S522b: The UE receives the bearer configuration parameter sent by the first network device.

S523b: The UE configures the transport bearer according to the bearer configuration parameter, to transmit the second RRC message.

FIG. 11 and FIG. 12 separately show two implementations in which the UE actively sets up the transport bearer and passively sets up the transport bearer when the transport bearer does not exist in a transmission process of the second information. After the setup of the transport bearer is completed, the first network device may transmit the second information to the UE by using the transport bearer.

It should be noted that the transport bearer may be a bearer shared with another RRC message, for example, an SRB1 or an SRB2 in the existing Protocol 36.331. Certainly, the transport bearer may alternatively be a dedicated bearer of the second RRC message. This is not specifically limited in this embodiment of the present disclosure.

It should be noted that the indication information of the exchange of the first information and the indication information of the exchange of the second information in the foregoing embodiments may be different indication information, or may be same indication information. When the indication information of the exchange of the first information and the indication information of the exchange of the second information are same indication information, whether the bearer is set up for exchanging the first information or the second information is not distinguished. After the setup of the bearer is completed, the bearer may be configured to exchange both the first information and the second information. A uniform explanation is given herein.

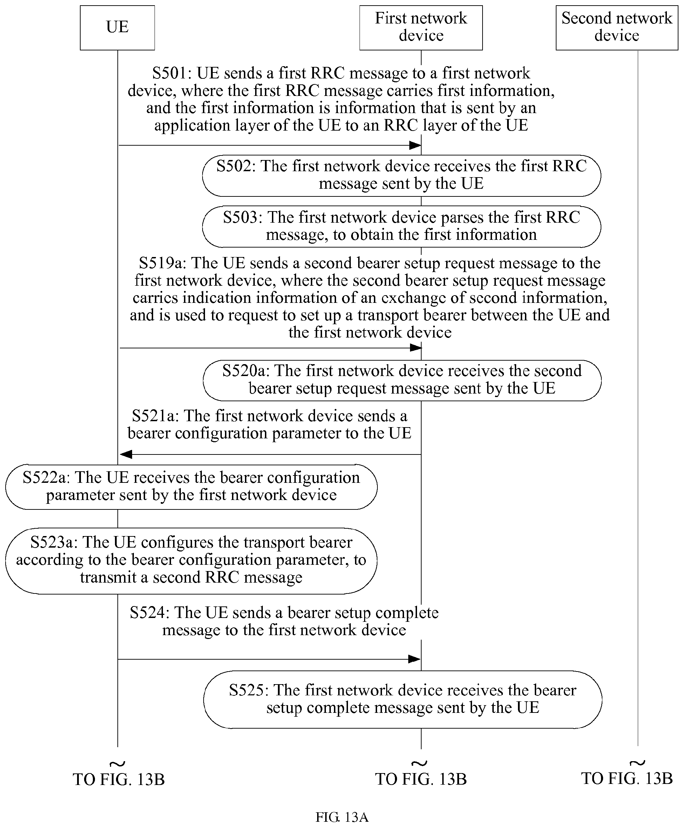

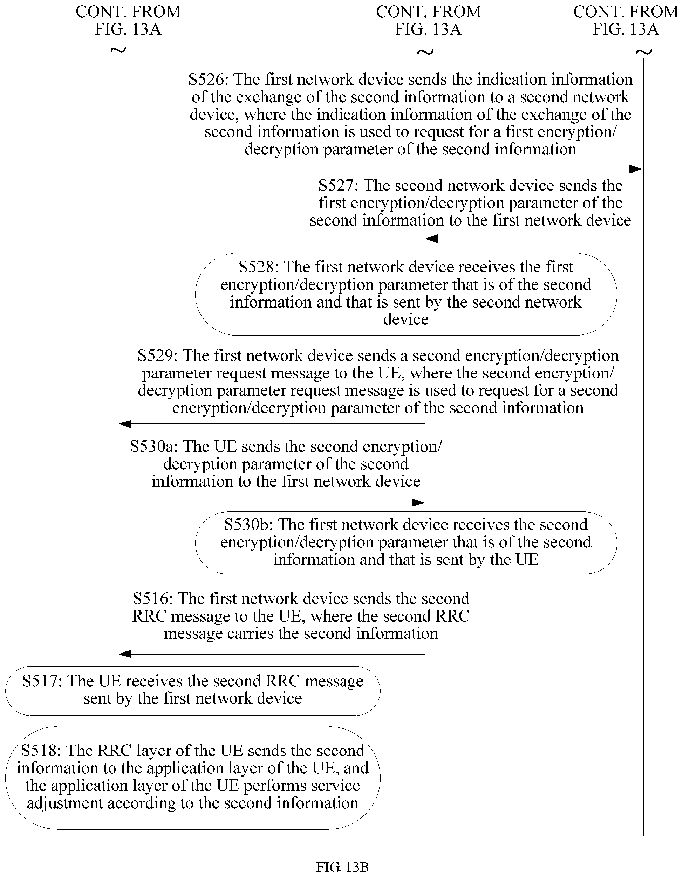

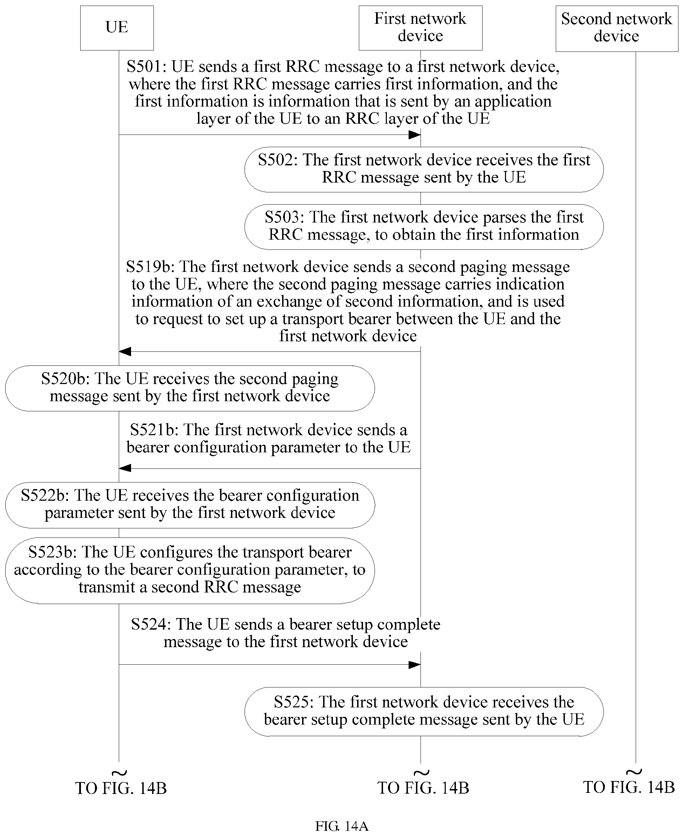

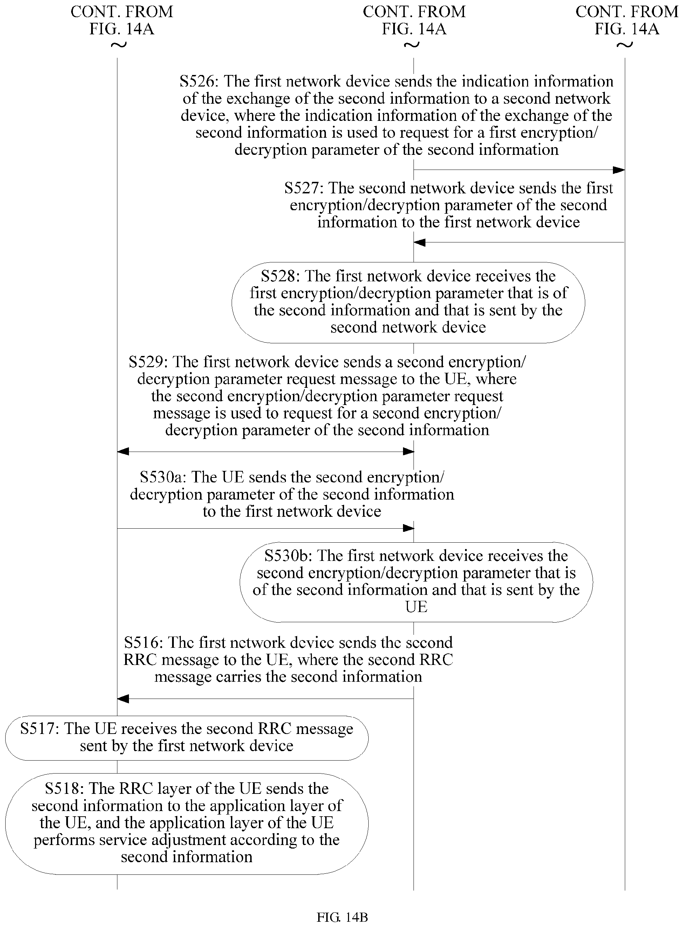

Optionally, considering that an encryption parameter is not negotiated in a setup process of the transport bearer, if the UE in an idle state triggers the foregoing process, high layer information possibly cannot be encrypted at an air interface during transmission. Therefore, in this embodiment of the present disclosure, as shown in FIG. 13A and FIG. 13B or in FIG. 14A and FIG. 14B, after the first network device receives the second bearer setup request message sent by the UE (step S520a), or after the first network device sends the second paging message to the UE (step S519b), the method further includes the following steps.

S524: The UE sends a bearer setup complete message to the first network device.

S525: The first network device receives the bearer setup complete message sent by the UE.

S526: The first network device sends the indication information of the exchange of the second information to the second network device, where the indication information of the exchange of the second information is used to request for a first encryption/decryption parameter of the second information.

For example, if the mobile communications system is an LTE system, the first network device is an eNB, and the second network device is an MME, the eNB may send the indication information of the exchange of the first information to the MME by using an initial UE message. The first encryption/decryption parameter is a key parameter required for encryption/decryption.

S527: The second network device sends the first encryption/decryption parameter of the second information to the first network device.

S528: The first network device receives the first encryption/decryption parameter that is of the second information and that is sent by the second network device.

S529: The first network device sends a second encryption/decryption parameter request message to the UE, where the second encryption/decryption parameter request message is used to request for a second encryption/decryption parameter of the second information.

S530a: The UE sends the second encryption/decryption parameter of the second information to the first network device.

S530b: The first network device receives the second encryption/decryption parameter that is of the second information and that is sent by the UE.

For example, if the mobile communications system is an LTE system, the first network device is an eNB, and the second network device is an MME, the eNB may send the second encryption/decryption parameter of the second information to the eNB by using a security mode message. The second encryption/decryption parameter is an algorithm parameter required for encryption/decryption.

Subsequently, the UE and the first network device may exchange the second information. For example, before sending the second RRC message to the UE, the first network device encrypts the second information by using a first encryption parameter and a second encryption parameter of the second information. After receiving the second RRC message sent by the first network device, the UE decrypts the second information by using a first decryption parameter and a second decryption parameter of the second information. Details are not described in this embodiment of the present disclosure.

It should be noted that the encryption/decryption may alternatively be integrity protection of a corresponding parameter. When the second network device does not exist, the first encryption/decryption parameter of the second information does not need to be obtained by means of the foregoing process. Further, the first network device may obtain all encryption/decryption parameters from the UE or the second network device, and does not need to obtain the encryption/decryption parameters separately from two parties. This is not specifically limited in this embodiment of the present disclosure.

According to the foregoing embodiment, when the UE in an idle state sets up the transport bearer and transmits the second information, the UE may complete air-interface encryption of the second information, thereby improving information transmission security.

It should be noted that in this embodiment of the present disclosure, steps S524 and S525 and step S526 are not necessarily performed according to a chronological order. Steps S524 and S525 may be first performed, and then step S526 is performed. Alternatively, S526 may be first performed, and then steps S524 and S525 are performed. Alternatively, steps S524 and S525 and step S526 may be simultaneously performed. This is not specifically limited in this embodiment of the present disclosure.

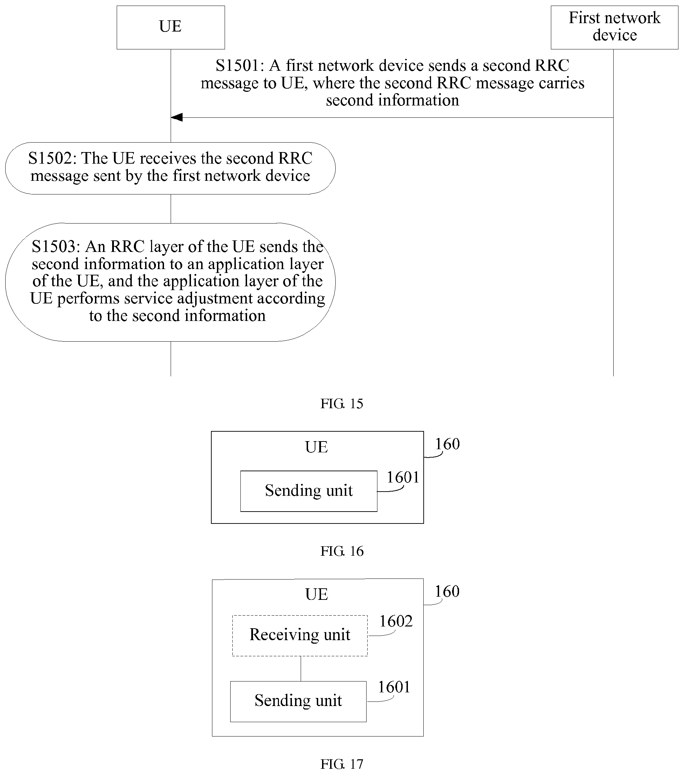

Based on the foregoing description, an embodiment of the present disclosure further provides an information exchange method. As shown in FIG. 15, the method includes the following steps:
S1501: A first network device sends a second RRC message to UE, where the second RRC message carries second information.

For example, the second information includes at least one of the following information: cell load information, cell edge indication information, handover indication information, cell capability information, and bit rate switch indication information.

The cell capability information is information indicating that a cell supports TCP proxy and/or direct routing.

S1502: The UE receives the second RRC message sent by the first network device.

S1503: An RRC layer of the UE sends the second information to an application layer of the UE, and the application layer of the UE performs service adjustment according to the second information.

It should be noted that some information in the second information may be transmitted to the application layer of the UE, and some information may be transmitted to the RRC layer of the UE. For example, the cell capability information may be obtained by the RRC layer of the UE, and does not need to be transmitted to the application layer. Based on this, when the second information is encapsulated, information that needs to be transmitted to the RRC layer of the UE does not need to be encapsulated into a container.

Based on the information exchange method provided in this embodiment of the present disclosure, in this embodiment of the present disclosure, when information is exchanged, the first network device sends the second RRC message to the UE. In this way, after the UE receives the second RRC message sent by the first network device, the RRC layer of the UE sends the second information to the application layer of the UE, and the application layer of the UE performs service adjustment according to the second information. Therefore, an interaction between a network side and the application layer of the UE is implemented, so that the application layer of the UE can perform service adjustment by fully using information on the network side, thereby ensuring user experience.

Further, in a transmission process of the second information, when a transport bearer does not exist, for a process of setting up the transport bearer by the UE, refer to the related descriptions about bearer setup in FIG. 11 and FIG. 12. Details are not described in this embodiment of the present disclosure again.

Further, in a setup process of the transport bearer, for a process of negotiating an encryption/decryption parameter, refer to the related descriptions about encryption/decryption parameter negotiation in FIG. 13A and FIG. 13B and in FIG. 14A and FIG. 14B. Details are not described in this embodiment of the present disclosure again.

Encryption/decryption parameter negotiation is performed in the setup process of the bearer. Therefore, when the UE in an idle state sets up the transport bearer and transmits the second information, the UE may complete air-interface encryption of the second information, thereby improving information transmission security.

It should be noted that according to the schematic diagram of the layer architecture shown in FIG. 3, this embodiment of the present disclosure further includes a manner in which a bottom layer of the UE obtains signal quality by means of measurement or the like, and transmits the information to the application layer. This case is not specifically limited in this embodiment of the present disclosure.

An embodiment further provides UE 160. As shown in FIG. 16, the UE 160 includes a sending unit 1601.

The sending unit 1601 is configured to send a first RRC message to a first network device, where the first RRC message carries first information, the first information is information that is sent by an application layer of the UE 160 to an RRC layer of the UE 160, and the first information includes at least one of the following information: service information of the UE 160, sensor information of the UE 160, user behavior information, and status information of the UE 160.

Optionally, the service information of the UE 160 includes at least one of the following information: service identification information, request indication type information, to-be-received data information, service status information, local routing information, transmission control protocol (TCP) proxy information, and data routing information.

Optionally, the sensor information of the UE 160 includes at least one of the following information: a motion rate of the UE 160, a motion track of the UE 160, and a motion direction of the UE 160.

Optionally, the user behavior information includes at least one of the following information: service termination, service suspension, screen locking, and turning off the UE.

Optionally, the status information of the UE 160 includes at least one of the following information: a quantity of electricity of the UE 160, screen resolution of the UE 160, and r a screen size of the UE 160.

Optionally, the sending unit 1601 is further configured to: before sending the first RRC message to the first network device, send a first bearer setup request message to the first network device, where the first bearer setup request message carries indication information of an exchange of the first information, and is used to request to set up a transport bearer between the UE 160 and the first network device.

Alternatively, as shown in FIG. 17, the UE 160 further includes a receiving unit 1602.

The receiving unit 1602 is configured to: before the sending unit 1601 sends the first RRC message to the first network device, receive a first paging message sent by the first network device, where the first paging message carries indication information of an exchange of the first information, and is used to request to set up a transport bearer between the UE 160 and the first network device.

Optionally, as shown in FIG. 17, the UE 160 further includes the receiving unit 1602.

The receiving unit 1602 is configured to receive a second RRC message sent by the first network device, where the second RRC message carries second information.

The RRC layer of the UE 160 sends the second information to the application layer of the UE 160, and the application layer of the UE 160 performs service adjustment according to the second information.

Optionally, the second information includes at least one of the following information: cell load information, cell edge indication information, handover indication information, cell capability information, and bit rate switch indication information.

Optionally, the sending unit 1601 is further configured to: before the receiving unit 1602 receives the second RRC message sent by the first network device, send a second bearer setup request message to the first network device, where the second bearer setup request message carries indication information of an exchange of the second information, and is used to request to set up the transport bearer between the UE 160 and the first network device.

Alternatively, the receiving unit 1602 is further configured to: before receiving the second RRC message sent by the first network device, receive a second paging message sent by the first network device, where the second paging message carries indication information of an exchange of the second information, and is used to request to set up the transport bearer between the UE 160 and the first network device.

It should be noted that the sending unit 1601 in this embodiment may be an interface circuit having a transmission function on the UE 160, for example, a transmitter. The receiving unit 1602 may be an interface circuit having a reception function on the UE 160, for example, a receiver. This is not specifically limited in this embodiment of the present disclosure.

For example, for a method for exchanging information by using the UE 160 provided in this embodiment of the present disclosure, refer to the foregoing method embodiment. Details are not described in this embodiment of the present disclosure again.

Based on the UE provided in this embodiment, when information is exchanged, the application layer of the UE first sends the first information to the RRC layer of the UE, and further, the UE sends the first information to the first network device by using the first RRC message. Therefore, an interaction between the application layer of the UE and a network side is implemented, so that the first network device can perform service adjustment or optimization according to the obtained first information, thereby ensuring proper resource allocation and use.

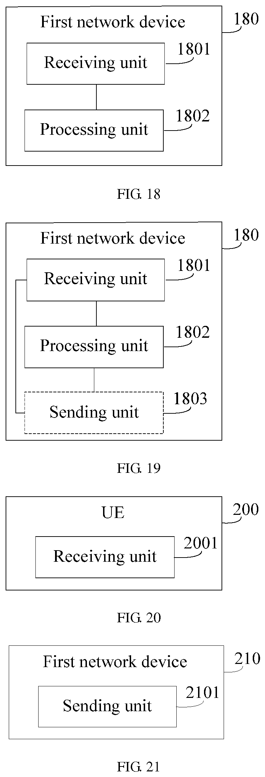

An embodiment of the present disclosure further provides a first network device 180. As shown in FIG. 18, the first network device 180 includes a receiving unit 1801 and a processing unit 1802.

The receiving unit 1801 is configured to receive a first RRC message sent by UE, where the first RRC message carries first information, the first information is information that is sent by an application layer of the UE to an RRC layer of the UE, and the first information includes at least one of the following information: service information of the UE, sensor information of the UE, user behavior information, and status information of the UE.

The processing unit 1802 is configured to parse the first RRC message, to obtain the first information.

Optionally, the processing unit 1802 is configured to: parse the first RRC message by using an RRC layer of the first network device 180, to obtain the first information.

Alternatively, the processing unit 1802 is configured to: parse the first RRC message by using an RRC layer of the first network device 180, to obtain encapsulation information of the first information; and send the encapsulation information of the first information to an RAC layer of the first network device 180 by using the RRC layer of the first network device 180, and parse the encapsulation information of the first information by using the RAC layer of the first network device 180, to obtain the first information.

Optionally, the service information of the UE includes at least one of the following information: service identification information, request indication type information, to-be-received data information, service status information, local routing information, transmission control protocol (TCP) proxy information, and data routing information.

Optionally, the sensor information of the UE includes at least one of the following information: a motion rate of the UE, a motion track of the UE, and a motion direction of the UE.

Optionally, the user behavior information includes at least one of the following information: service termination, service suspension, screen locking, and turning off the UE.

Optionally, the status information of the UE includes at least one of the following information: a quantity of electricity of the UE, screen resolution of the UE, and a screen size of the UE.

Optionally, the receiving unit 1801 is further configured to: before receiving the first RRC message sent by the UE, receive a first bearer setup request message sent by the UE, where the first bearer setup request message carries indication information of an exchange of the first information, and is used to request to set up a transport bearer between the UE and the first network device 180.

Alternatively, as shown in FIG. 19, the first network device 180 further includes a sending unit 1803.

The sending unit 1803 is configured to: before the receiving unit 1801 receives the first RRC message sent by the UE, send a first paging message to the UE, where the first paging message carries indication information of an exchange of the first information, and is used to request to set up a transport bearer between the UE and the first network device 180.

Optionally, the sending unit 1803 is further configured to: after the receiving unit 1801 receives the first bearer setup request message sent by the UE, or after the sending unit 1803 sends the first paging message to the UE, send the indication information of the exchange of the first information to a second network device, where the indication information of the exchange of the first information is used to request for a first encryption/decryption parameter of the first information.

The receiving unit 1801 is further configured to receive the first encryption/decryption parameter that is of the first information and that is sent by the second network device.

The sending unit 1803 is further configured to send a first encryption/decryption parameter request message to the UE, where the first encryption/decryption parameter request message is used to request for a second encryption/decryption algorithm parameter of the first information.

The receiving unit 1801 is further configured to receive the second encryption/decryption algorithm parameter that is of the first information and that is sent by the UE.

Optionally, as shown in FIG. 19, the first network device 180 further includes a sending unit 1803.

The sending unit 1803 is configured to send a second RRC message to the UE, where the second RRC message carries second information, the RRC layer of the UE sends the second information to the application layer of the UE, and the application layer of the UE performs service adjustment according to the second information.

Optionally, the second information includes at least one of the following information: cell load information, cell edge indication information, handover indication information, cell capability information, and bit rate switch indication information.

Optionally, the receiving unit 1801 is further configured to: before the sending unit 1803 sends the second RRC message to the UE, receive a second bearer setup request message sent by the UE, where the second bearer setup request message carries indication information of an exchange of the second information, and is used to request to set up the transport bearer between the UE and the first network device 180.

Alternatively, the sending unit 1803 is further configured to: before sending the second RRC message to the UE, send a second paging message to the UE, where the second paging message carries indication information of an exchange of the second information, and is used to request to set up the transport bearer between the UE and the first network device 180.

Optionally, the sending unit 1803 is further configured to: after the receiving unit 1801 receives the second bearer setup request message sent by the UE, or after the sending unit 1803 sends the second paging message to the UE, send the indication information of the exchange of the second information to a second network device, where the indication information of the exchange of the second information is used to request for a first encryption/decryption parameter of the second information.

The receiving unit 1801 is further configured to receive the first encryption/decryption parameter that is of the second information and that is sent by the second network device.

The sending unit 1803 is further configured to send a second encryption/decryption parameter request message to the UE, where the second encryption/decryption parameter request message is used to request for a second encryption/decryption algorithm parameter of the second information.

The receiving unit 1801 is further configured to receive the second encryption/decryption algorithm parameter that is of the second information and that is sent by the UE.

It should be noted that the sending unit 1803 in this embodiment may be an interface circuit having a transmission function on the first network device 180, for example, a transmitter. The receiving unit 1801 may be an interface circuit having a reception function on the first network device 180, for example, a receiver. The processing unit 1802 may be an independently disposed processor, or may be integrated in a processor of the first network device 180 for implementation. In addition, the processing unit 1802 may alternatively be stored in a memory of the first network device 180 in a form of program code, and a processor of the first network device 180 invokes and executes functions of the processing unit 1802. The processor herein may be a central processing unit (CPU) or an application-specific integrated circuit (ASIC), or may be one or more integrated circuits configured to implement this embodiment of the present disclosure.

For example, for a method for exchanging information by using the first network device 180 provided in this embodiment of the present disclosure, refer to the foregoing method embodiment. Details are not described in this embodiment of the present disclosure again.

Based on the first network device provided in this embodiment of the present disclosure, in this embodiment of the present disclosure, when information is exchanged, the first network device may receive the first RRC message sent by the UE, where the first RRC message carries the first information, and the first information is information that is sent by the application layer of the UE to the RRC layer of the UE. Therefore, an interaction between the application layer of the UE and a network side is implemented, so that the first network device can perform service adjustment or optimization according to the obtained first information, thereby ensuring proper resource allocation and use.

An embodiment of the present disclosure further provides UE 200. As shown in FIG. 20, the UE 200 includes a receiving unit 2001.

The receiving unit 2001 is configured to receive a second RRC message sent by a first network device, where the second RRC message carries second information.

An RRC layer of the UE 200 sends the second information to an application layer of the UE 200, and the application layer of the UE 200 performs service adjustment according to the second information.

Optionally, the second information includes at least one of the following information: cell load information, cell edge indication information, handover indication information, cell capability information, and bit rate switch indication information.

It should be noted that the receiving unit 2001 in this embodiment may be an interface having a reception function on the UE 200, for example, a receiver. This is not specifically limited in this embodiment of the present disclosure.

For example, for a method for exchanging information by using the UE 200 provided in this embodiment of the present disclosure, refer to the foregoing method embodiment. Details are not described in this embodiment of the present disclosure again.

Based on the UE provided in this embodiment of the present disclosure, in this embodiment of the present disclosure, when information is exchanged, the UE receives the second RRC message sent by the first network device, where the second RRC message carries the second information. Further, the RRC layer of the UE sends the second information to the application layer of the UE, and the application layer of the UE performs service adjustment according to the second information. Therefore, an interaction between a network side and the application layer of the UE is implemented, so that the application layer of the UE can perform service adjustment by fully using information on the network side, thereby ensuring user experience.

An embodiment of the present disclosure further provides a first network device 210. As shown in FIG. 21, the first network device 210 includes a sending unit 2101.

The sending unit 2101 is configured to send a second RRC message to UE, where the second RRC message carries second information, an RRC layer of the UE sends the second information to an application layer of the UE, and the application layer of the UE performs service adjustment according to the second information.

Optionally, the second information includes at least one of the following information: cell load information, cell edge indication information, handover indication information, cell capability information, and bit rate switch indication information.

It should be noted that the sending unit 2101 in this embodiment may be an interface having a transmission function on the first network device 210, for example, a transmitter. This is not specifically limited in this embodiment of the present disclosure.

For example, for a method for exchanging information by using the first network device 210 provided in this embodiment of the present disclosure, refer to the foregoing method embodiment. Details are not described in this embodiment of the present disclosure again.

Based on the first network device provided in this embodiment of the present disclosure, in this embodiment of the present disclosure, when information is exchanged, the first network device sends the second RRC message to the UE, where the second RRC message carries the second information. In this way, after the UE receives the second RRC message sent by the first network device, the RRC layer of the UE sends the second information to the application layer of the UE, and the application layer of the UE performs service adjustment according to the second information. Therefore, an interaction between a network side and the application layer of the UE is implemented, so that the application layer of the UE can perform service adjustment by fully using information on the network side, thereby ensuring user experience.

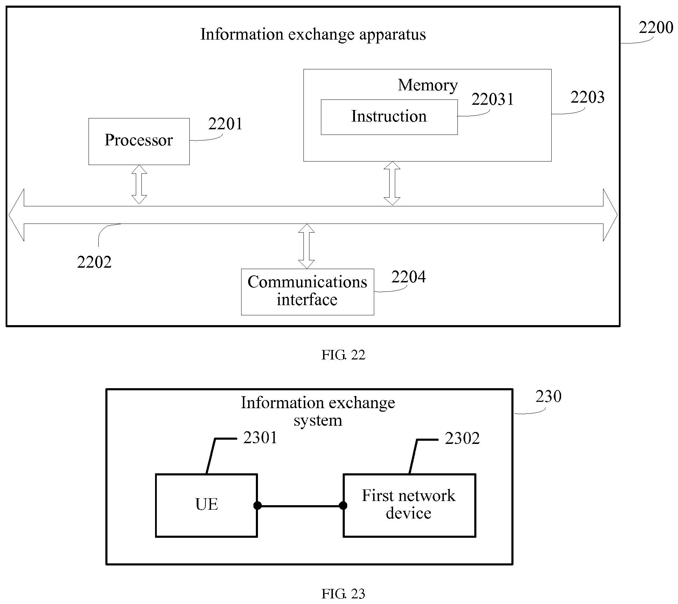

Corresponding to the foregoing method embodiments, an embodiment provides an information exchange apparatus. As shown in FIG. 22, the information exchange apparatus 2200 includes: a processor 2201, a memory 2203, a bus 2202, and a communications interface 2204, where the processor 2201, the memory 2203, and the communications interface 2204 are connected and communicate with each other by using the bus 2202.

The processor 2201 may be a single-core or multi-core central processing unit, or an application-specific integrated circuit, or may be configured as one or more integrated circuits for implementing this embodiment of the present disclosure.

The memory 2203 may be a high-speed random access memory (RAM), or may be a non-volatile memory, for example, at least one magnetic disk storage.

The memory 2203 is configured to store a computer executable instruction 22031. For example, the computer executable instruction 22031 may include program code.

When the information exchange apparatus 2200 runs, the processor 2201 executes the computer executable instruction 22031, and may perform the procedure of the information exchange method on the UE side or the first network device side in any method embodiment in FIG. 4 to FIG. 15. When the procedure of the information exchange method on the UE side in any method embodiment in FIG. 4 to FIG. 15 is performed, the information exchange apparatus 2200 is UE. When the procedure of the information exchange method on the first network device side in any method embodiment in FIG. 4 to FIG. 15 is performed, the information exchange apparatus 2200 is a first network device.

In this embodiment, the information exchange apparatus 2200 can be configured to perform the foregoing method. Therefore, for a technical effect that can be obtained by the information exchange apparatus 2200, refer to the descriptions about the foregoing method embodiments. Details are not described herein again.

Corresponding to the foregoing method embodiments, an embodiment provides an information exchange system 230. As shown in FIG. 23, the information exchange system includes UE 2301 and a first network device 2302.

The UE 2301 may be UE having the functions of the UE 160 in the foregoing embodiment, and the first network device 2302 may be a device having the functions of the first network device 180 in the foregoing embodiment.

Alternatively, the UE 2301 may be UE having the functions of the UE 200 in the foregoing embodiment, and the first network device 2302 may be a device having the functions of the first network device 210 in the foregoing embodiment.

For example, for a method for exchanging information by using the information exchange system 230 provided in this embodiment of the present disclosure, refer to the foregoing method embodiments. Details are not described in this embodiment of the present disclosure again.

In this embodiment, the information exchange system 230 can be configured to perform the foregoing method. Therefore, for a technical effect that can be obtained by the information exchange system 230, refer to the descriptions about the foregoing method embodiments. Details are not described herein again.

In addition, a computer readable medium (or medium) is further provided, including a computer readable instruction for performing the following operations when being executed: performing operations of any device in the method embodiments shown in FIG. 4 to FIG. 15 in the foregoing embodiments.

In addition, a computer program product is further provided, including the foregoing computer readable medium.

It should be understood that sequence numbers of the foregoing processes do not mean execution sequences in various embodiments of the present disclosure. The execution sequences of the processes should be determined according to functions and internal logic of the processes, and should not be construed as any limitation on the implementation processes of the embodiments of the present disclosure.

It may be clearly understood by a person skilled in the art that, for the purpose of convenient and brief description, in the apparatus described above, division of the foregoing function modules is taken as an example for illustration. In actual application, the foregoing functions can be allocated to different modules and implemented according to a requirement, that is, an inner structure of an apparatus is divided into different function modules to implement all or part of the functions described above. For a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present disclosure essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present disclosure. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure, which is defined by the appended claims.

## Claims

1. A first network device, wherein the first network device comprises a receiving unit (1801) and a processing unit,
• wherein the receiving unit is configured to receive (S502) a first radio resource control, RRC, message sent by a user equipment, UE,
wherein the first RRC message carries first information, and the first information comprises service information of the UE and the service information of the UE comprises request indication type information indicating whether a service request for a service initiated by a user of the UE is a first time request for the service or whether the user is waiting at a buffering stage for the service;
• wherein the processing unit is configured to parse (S503) the first RRC message by using an RRC layer of the first network device to obtain the first information,
or,
the processing unit is configured to: parse (S503) the first RRC message by using the RRC layer of the first network device to obtain encapsulation information of the first information and send the encapsulation information of the first information to a radio access network application control, RAC, layer of the first network device by using the RRC layer of the first network device and parse the encapsulation information of the first information by using the RAC layer of the first network device to obtain the first information;
• wherein the first network device is configured to perform a service adjustment of the service based on the first information.

2. The first network device according to claim 1, wherein
the receiving unit (1801) is further configured to: before receiving the first RRC message sent by the UE, receive a first bearer setup request message sent by the UE, wherein the first bearer setup request message carries indication information of an exchange of the first information, and is used to request to set up a transport bearer between the UE and the first network device; or
the first network device further comprises a sending unit (1803), configured to, before the receiving unit (1801) receives the first RRC message sent by the UE, send a first paging message to the UE, wherein the first paging message carries indication information of an exchange of the first information, and is used to request to set up a transport bearer between the UE and the first network device.

3. The first network device according to claim 2, wherein
the sending unit (1803) is configured to: after the receiving unit (1801) receives the first bearer setup request message sent by the UE, or after the sending unit (1803) sends the first paging message to the UE, send the indication information of the exchange of the first information to a second network device, wherein the indication information of the exchange of the first information is used to request for a first encryption/decryption parameter of the first information;
the receiving unit (1801) is configured to receive the first encryption/decryption parameter that is of the first information and that is sent by the second network device;
the sending unit (1803) is further configured to send a first encryption/decryption parameter request message to the UE, wherein the first encryption/decryption parameter request message is used to request for a second encryption/decryption algorithm parameter of the first information; and
the receiving unit (1801) is configured to receive the second encryption/decryption algorithm parameter that is of the first information and that is sent by the UE.

4. The first network device according to any one of claims 1 to 3, wherein the first network device further comprises a sending unit (1803) configured to send a second RRC message to the UE, wherein the second RRC message carries second information, whereby the RRC layer of the UE sends the second information to the application layer of the UE, and the application layer of the UE performs service adjustment according to the second information.

5. The first network device according to claim 4, wherein the second information comprises at least one of the following information:
cell load information, cell edge indication information, handover indication information, cell capability information, and bit rate switch indication information.

6. The first network device according to claim 4 or 5, wherein
the receiving unit (1801) is further configured to: before the sending unit (1803) sends the second RRC message to the UE, receive a second bearer setup request message sent by the UE, wherein the second bearer setup request message carries indication information of an exchange of the second information, and is used to request to set up the transport bearer between the UE and the first network device; or
the sending unit (1803) is further configured to: before sending the second RRC message to the UE, send a second paging message to the UE, wherein the second paging message carries indication information of an exchange of the second information, and is used to request to set up the transport bearer between the UE and the first network device.

## Patentansprüche

1. Eine erste Netzwerkvorrichtung, wobei die erste Netzwerkvorrichtung eine Empfangseinheit (1801) und eine Verarbeitungseinheit umfasst,
- wobei die Empfangseinheit dazu konfiguriert ist, eine erste Funkressourcensteuerungs-RRC-Nachricht zu empfangen (S502), die von einem Benutzergerät, UE, gesendet wird,
wobei die erste RRC-Nachricht erste Informationen trägt, und die ersten Informationen Dienstinformationen der UE umfassen und die Dienstinformationen der UE Informationen über die Art der Anfrageanzeige umfassen, die anzeigen, ob eine Dienstanforderung für einen von einem Benutzer der UE initiierten Dienst eine erstmalige Anforderung für den Dienst ist oder ob der Benutzer in einer Pufferphase auf den Dienst wartet;
- wobei die Verarbeitungseinheit dazu konfiguriert ist, die erste RRC-Nachricht unter Verwendung einer RRC-Schicht der ersten Netzwerkvorrichtung zu parsen (S503), um die ersten Informationen zu erhalten, oder,
die Verarbeitungseinheit dazu konfiguriert ist, die erste RRC-Nachricht zu parsen (S503), indem sie die RRC-Schicht der ersten Netzwerkvorrichtung verwendet, um Verkapselungsinformationen der ersten Informationen zu erhalten und die Verkapselungsinformationen der ersten Informationen an eine Funkzugriffsnetzwerkanwendungssteuerungs-RAC-Schicht der ersten Netzwerkvorrichtung unter Verwendung der RRC-Schicht der ersten Netzwerkvorrichtung zu senden, und die Verkapselungsinformationen der ersten Informationen unter Verwendung der RAC-Schicht der ersten Netzwerkvorrichtung zu parsen, um die ersten Informationen zu erhalten;
- wobei die erste Netzwerkvorrichtung dazu konfiguriert ist, eine Dienstanpassung des Dienstes basierend auf den ersten Informationen durchzuführen.

2. Erste Netzwerkvorrichtung nach Anspruch 1, wobei
die Empfangseinheit (1801) ferner dazu konfiguriert ist, vor dem Empfangen der ersten von der UE gesendeten RRC-Nachricht eine erste von der UE gesendete Träger-Setup-Anforderungsnachricht zu empfangen, wobei die erste Träger-Setup-Anforderungsnachricht Anzeigeinformationen über einen Austausch der ersten Informationen trägt und zur Anforderung verwendet wird, einen Transportträger zwischen der UE und der ersten Netzwerkvorrichtung einzurichten; oder
die erste Netzwerkvorrichtung ferner eine Sendeeinheit (1803) umfasst, die dazu konfiguriert ist, bevor die Empfangseinheit (1801) die von der UE gesendete erste RRC-Nachricht empfängt, eine erste Paging-Nachricht an die UE zu senden, wobei die erste Paging-Nachricht Anzeigeinformationen über einen Austausch der ersten Informationen trägt und zur Anforderung des Einrichtens eines Transportträgers zwischen der UE und der ersten Netzwerkvorrichtung verwendet wird.

3. Erste Netzwerkvorrichtung nach Anspruch 2, wobei
die Sendeeinheit (1803) dazu konfiguriert ist, nach dem Empfangen der von der UE gesendeten ersten Träger-Setup-Anforderungsnachricht durch die Empfangseinheit (1801) oder nachdem die Sendeeinheit (1803) die erste Paging-Nachricht an die UE sendet, die Anzeigeinformationen über den Austausch der ersten Informationen an eine zweite Netzwerkvorrichtung zu senden, wobei die Anzeigeinformationen über den Austausch der ersten Informationen verwendet werden, um einen ersten Verschlüsselungs-/Entschlüsselungsparameter der ersten Informationen anzufordern; die Empfangseinheit (1801) dazu konfiguriert ist, den ersten Verschlüsselungs-/Entschlüsselungsparameter zu empfangen, der aus den ersten Informationen stammt und der von der zweiten Netzwerkvorrichtung gesendet wird;
die Sendeeinheit (1803) ferner dazu konfiguriert ist, eine erste Verschlüsselungs-/Entschlüsselungsparameter-Anforderungsnachricht an die UE zu senden, wobei die erste Verschlüsselungs-/Entschlüsselungsparameter-Anforderungsnachricht verwendet wird, um einen zweiten Verschlüsselungs-/Entschlüsselungsalgorithmusparameter der ersten Informationen anzufordern; und die Empfangseinheit (1801) dazu konfiguriert ist, den zweiten Verschlüsselungs-/Entschlüsselungsalgorithmusparameter zu empfangen, der aus den ersten Informationen stammt und von dem UE gesendet wird.

4. Erste Netzwerkvorrichtung nach einem der Ansprüche 1 bis 3, wobei die erste Netzwerkvorrichtung ferner eine Sendeeinheit (1803) umfasst, die dazu konfiguriert ist, eine zweite RRC-Nachricht an die UE zu senden, wobei die zweite RRC-Nachricht zweite Informationen trägt, wodurch
die RRC-Schicht der UE die zweiten Informationen an die Anwendungsschicht der UE sendet, und die Anwendungsschicht der UE eine Dienstanpassung gemäß der zweiten Informationen durchführt.

5. Erste Netzwerkvorrichtung nach Anspruch 4, wobei die zweiten Informationen mindestens eine der folgenden Informationen umfassen:
Zellbelastungsinformationen, Zellenflankenanzeigeinformationen, Übergabeanzeigeinformationen, Zellenfähigkeitsinformationen und Bitratenwechselanzeigeinformationen.

6. Netzwerkvorrichtung nach Anspruch 4 oder 5, wobei
die Empfangseinheit (1801) ferner dazu konfiguriert ist, bevor die Sendeeinheit (1803) die zweite RRC-Nachricht an die UE sendet, eine zweite von der UE gesendete Träger-Setup-Anforderungsnachricht zu empfangen, wobei die zweite Träger-Setup-Anforderungsnachricht Anzeigeinformationen über einen Austausch der zweiten Informationen trägt und zur Anforderung verwendet wird, den Transport-Träger zwischen der UE und der ersten Netzwerkvorrichtung einzurichten; oder
die Sendeeinheit (1803) ferner dazu konfiguriert ist, bevor die zweite RRC-Nachricht an die UE gesendet wird, Senden einer zweiten Paging-Nachricht an die UE, wobei die zweite Paging-Nachricht Anzeigeinformationen über einen Austausch der zweiten Informationen trägt und zum Anfordern des Einrichtens des Transportträgers zwischen der UE und der ersten Netzwerkvorrichtung verwendet wird.

## Revendications

1. Premier dispositif de réseau, le premier dispositif de réseau comprenant une unité de réception (1801) et une unité de traitement,
• dans lequel l'unité de réception est configurée pour recevoir (S502) un premier message de commande de ressource radio (RRC) envoyé par un équipement utilisateur (UE), dans lequel le premier message de commande RRC transporte des premières informations et les premières informations comportent des informations de service de l'équipement utilisateur et les informations de service de l'équipement utilisateur comportent des informations de type d'indication de demande indiquant si une demande de service pour un service initié par un utilisateur de l'équipement utilisateur est une demande du service pour la première fois ou si l'utilisateur attend, à un étage de mise en mémoire tampon, le service ;
• dans lequel l'unité de traitement est configurée pour analyser (S503) le premier message de commande RRC en utilisant une couche de commande RRC du premier dispositif de réseau pour obtenir les premières informations,
ou
l'unité de traitement est configurée : pour analyser (S503) le premier message de commande RRC en utilisant la couche de commande RRC du premier dispositif de réseau pour obtenir des informations d'encapsulation des premières informations et pour envoyer les informations d'encapsulation des premières informations à une couche de commande d'application de réseau d'accès radio (RAC) du premier dispositif de réseau en utilisant la couche de commande RRC du premier dispositif de réseau et pour analyser les informations d'encapsulation des premières informations en utilisant la couche de commande RAC du premier dispositif de réseau pour obtenir les premières informations ;
• dans lequel le premier dispositif de réseau est configuré pour effectuer un ajustement de service du service en se basant sur les premières informations.

2. Premier dispositif de réseau selon la revendication 1,
l'unité de réception (1801) étant en outre configurée : avant la réception du premier message de commande RRC envoyé par l'équipement utilisateur, pour recevoir un premier message de demande de configuration de support envoyé par l'équipement utilisateur, dans lequel le premier message de demande de configuration de support transporte des informations d'indication d'un échange des premières informations et est utilisé pour demander de configurer un support de transport entre l'équipement utilisateur et le premier dispositif de réseau ; ou
le premier dispositif de réseau comprenant en outre une unité d'envoi (1803), configurée, avant que l'unité de réception (1801) ne reçoive le premier message de commande RRC envoyé par l'équipement utilisateur, pour envoyer un premier message de radiomessagerie à l'équipement utilisateur, dans lequel le premier message de radiomessagerie transporte des informations d'indication d'un échange des premières informations et est utilisé pour demander de configurer un support de transport entre l'équipement utilisateur et le premier dispositif de réseau.

3. Premier dispositif de réseau selon la revendication 2, dans lequel
l'unité d'envoi (1803) est configurée : après que l'unité de réception (1801) reçoit le premier message de demande de configuration de support envoyé par l'équipement utilisateur ou après que l'unité d'envoi (1803) envoie le premier message de radiomessagerie à l'équipement utilisateur, pour envoyer les informations d'indication de l'échange des premières informations à un second dispositif de réseau, dans lequel les informations d'indication de l'échange des premières informations sont utilisées pour demander un premier paramètre de cryptage/décryptage des premières informations ;
l'unité de réception (1801) est configurée pour recevoir le premier paramètre de cryptage/décryptage des premières informations et qui est envoyé par le second dispositif de réseau ;
l'unité d'envoi (1803) est en outre configurée pour envoyer un premier message de demande de paramètre de cryptage/décryptage à l'équipement utilisateur, dans lequel le premier message de demande de paramètre de cryptage/décryptage est utilisé pour demander un second paramètre d'algorithme de cryptage/décryptage des premières informations ; et
l'unité de réception (1801) est configurée pour recevoir le second paramètre d'algorithme de cryptage/décryptage des premières informations et qui est envoyé par l'équipement utilisateur.

4. Premier dispositif de réseau selon l'une quelconque des revendications 1 à 3, le premier dispositif de réseau comprenant en outre une unité d'envoi (1803) configurée pour envoyer un second message de commande RRC à l'équipement utilisateur, dans lequel le second message de commande RRC transporte des secondes informations, moyennant quoi la couche de commande RRC de l'équipement utilisateur envoie les secondes informations à la couche d'application de l'équipement utilisateur, et la couche d'application de l'équipement utilisateur effectue un ajustement de service en fonction des secondes informations.

5. Premier dispositif de réseau selon la revendication 4, dans lequel les secondes informations comportent :
des informations de charge de cellule et/ou des informations d'indication de bord de cellule et/ou des informations d'indication de transfert intercellulaire et/ou des informations de capacité de cellule et/ou des informations d'indication de commutation de débit binaire.

6. Premier dispositif de réseau selon la revendication 4 ou 5, dans lequel
l'unité de réception (1801) est en outre configurée : avant que l'unité d'envoi (1803) n'envoie le second message de commande RRC à l'équipement utilisateur, pour recevoir un second message de demande de configuration de support envoyé par l'équipement utilisateur, dans lequel le second message de demande de configuration de support transporte des informations d'indication d'un échange des secondes informations et est utilisé pour demander de configurer le support de transport entre l'équipement utilisateur et le premier dispositif de réseau ; ou
l'unité d'envoi (1803) est en outre configurée : avant l'envoi du second message de commande RRC à l'équipement utilisateur, pour envoyer un second message de radiomessagerie à l'équipement utilisateur, dans lequel le second message de radiomessagerie transporte des informations d'indication d'un échange des secondes informations et est utilisé pour demander de configurer le support de transport entre l'équipement utilisateur et le premier dispositif de réseau.
